# EUROPEAN PATENT APPLICATION

(11) **EP 4 694 569 A1**
(43) Date of publication of application: **11.02.2026**
(21) Application number: 23932111.0
(22) Date of filing: 07.04.2023
(51) Int. Cl.: H04W 84/06, H04W 64/00

(54) **TERMINAL, BASE STATION, WIRELESS COMMUNICATION SYSTEM, AND WIRELESS COMMUNICATION METHOD**

(71) Applicant: NTT DOCOMO, INC., Tokyo 100-6150 (JP)
(72) Inventor: YOSHIOKA Shohei, Tokyo 100-6150 (JP); NAGATA Satoshi, Tokyo 100-6150 (JP); WANG Jing, Beijing 100190 (CN); SUN Weiqi, Beijing 100190 (CN); YOU Luhua, Beijing 100190 (CN); CHEN Lan, Beijing 100190 (CN)
(74) Representative: Hoffmann Eitle
(86) International application number: PCT/JP2023/014461
(87) International publication number: WO 2024/209701

(57) **Abstract**

A terminal includes: a receiving unit that receives a downlink reference signal from a non-terrestrial network device via a non-terrestrial network; and a control unit that controls a report of a measurement result regarding the downlink reference signal in specific control of estimating location information of the terminal based on the downlink reference signal, wherein the control unit assumes information regarding the location information of the terminal with a definition different from a definition in a terrestrial network.

## Description

### Technical Field

The present disclosure relates to a terminal, a base station, a radio communication system, and a radio communication method for estimating location information of a terminal.

### Background Art

The 3rd Generation Partnership Project (3GPP) specifies 5th generation mobile communication system (5G, also called New Radio (NR) or Next Generation (NG)), and next-generation specifications called Beyond 5G, 5G Evolution, or 6G have also been promoted.

In the 3GPP, a technique for estimating location information of a terminal (hereinafter, UE; User Equipment) using a method such as Multi-RTT(Round Trip Time), DL-TDOA (Downlink Time Difference of Arrival), UL-TDOA (Uplink Time Difference of Arrival) or the like is specified (for example, Non Patent Literature 1).

In such a technique for estimating the location information of the UE, DL-RSTD (Downlink Reference Signal Time Difference), UL-RTOA (Uplink Relative Time of Arrival), UE Rx-Tx time difference, gNB Rx-Tx time difference, or the like are used (for example, Non Patent Literature 2).

Further, in the 3GPP, an NTN (Non-Terrestrial Network) has been studied. In the NTN, a non-terrestrial network such as an artificial satellite (hereinafter, a satellite) is used to provide services to areas that cannot be covered by a terrestrial network for reasons such as cost.

### Citation List

### Non Patent Literature

Non Patent Literature 1: 3GPP TS38.305 V17.4.0 March, 2023
Non Patent Literature 2: 3GPP TS38.215 V17.3.0 March, 2023

### Summary of Invention

Meanwhile, methods such as Multi-RTT, DL-TDOA, and UL- TDOA are methods on the premise of communication between a plurality of (preferably, three or more) TRPs (Transmission-

### Reception Points) and the UE.

Accordingly, in the NTN, a case is assumed in which it is difficult to capture a plurality of TRPs (for example, a satellite or the like that relays between the base station and the UE) and it is necessary to estimate the location information of the UE using one TRP.

Under such a background, as a result of intensive studies, the inventors have found that it is not possible to appropriately estimate the location information of the UE when the UE/gNB Rx-Tx time difference, DL-RSTD, and UL-RTOA are defined in the same manner as in the TN (Terrestrial Network).

Therefore, the present invention has been made to solve the above-described problem, and an object is to provide a terminal, a base station, a radio communication system, and a radio communication method capable of appropriately estimating the location information of a terminal in an NTN.

A disclosed aspect is a terminal including: a receiving unit that receives a downlink reference signal from a non-terrestrial network device via a non-terrestrial network; and a control unit that controls a report of a measurement result regarding the downlink reference signal in specific control of estimating location information of the terminal based on the downlink reference signal, wherein the control unit assumes information regarding the location information of the terminal with a definition different from a definition in a terrestrial network.

A disclosed aspect is a base station including: a receiving unit that receives an uplink reference signal from a non-terrestrial network device via a non-terrestrial network; and a control unit that controls a report of a measurement result regarding the uplink reference signal in specific control of estimating location information of a terminal based on the uplink reference signal, wherein the control unit assumes information regarding the location information of the terminal with a definition different from a definition in a terrestrial network.

A disclosed aspect is a radio communication system including: a terminal; and a base station, wherein at least one node of the terminal and the base station includes a receiving unit that receives a reference signal from a non-terrestrial network device via a non-terrestrial network, and a control unit that controls a report of a measurement result regarding the reference signal in specific control of estimating location information of the terminal based on the reference signal, wherein the control unit assumes information regarding the location information of the terminal with a definition different from a definition in a terrestrial network.

A disclosed aspect is a radio communication method including: a step of receiving a reference signal from a non-terrestrial network device via a non-terrestrial network; a step of controlling a report of a measurement result regarding the reference signal in specific control of estimating location information of a terminal based on the reference signal; and a step of assuming information regarding the location information of the terminal with a definition different from a definition in a terrestrial network.

### Brief Description of Drawings

[Fig. 1] Fig. 1 is an overall schematic configuration diagram of a radio communication system 10.
[FIG. 2] Fig. 2 is a diagram illustrating frequency ranges used in the radio communication system 10.
[FIG. 3] Fig. 3 is a diagram illustrating a configuration example of a radio frame, a sub-frame, and a slot used in the radio communication system 10.
[FIG. 4] Fig. 4 is a functional block diagram of a UE 200.
[FIG. 5] Fig. 5 is a functional block diagram of a gNB 100.
[FIG. 6] Fig. 6 is a functional block diagram of an LMF 300.
[FIG. 7] Fig. 7 is a diagram for explaining a protocol.
[FIG. 8] Fig. 8 is a diagram for explaining an outline of an operation example.
[FIG. 9] Fig. 9 is a diagram for explaining Problem 1.
[FIG. 10] Fig. 10 is a diagram for explaining Problem 1.
[FIG. 11] Fig. 11 is a diagram for explaining Operation Example 1.
[FIG. 12] Fig. 12 is a diagram for explaining Operation Example 1.
[FIG. 13] Fig. 13 is a diagram for explaining Problem 2.
[FIG. 14] Fig. 14 is a diagram for explaining Problem 2.
[FIG. 15] Fig. 15 is a diagram for explaining Operation Example 2.
[FIG. 16] Fig. 16 is a diagram for explaining Operation Example 2.
[FIG. 17] Fig. 17 is a diagram for explaining Problem 3.
[FIG. 18] Fig. 18 is a diagram for explaining Problem 3.
[FIG. 19] Fig. 19 is a diagram for explaining Operation Example 3.
[FIG. 20] Fig. 20 is a diagram for explaining Operation Example 4.
[FIG. 21] Fig. 21 is a diagram for explaining Operation Example 4.
[FIG. 22] Fig. 22 is a diagram illustrating an example of a hardware configuration of the gNB 100 and the UE 200.
[FIG. 23] Fig. 23 is a diagram illustrating a configuration example of a vehicle 2001.

### Description of Embodiments

An embodiment will be described below with reference to the drawings. Note that the same or similar reference numerals have been attached to the same functions and configurations, and a description thereof will be omitted as appropriate.

### [Embodiment]

### (1) Overall schematic configuration of radio communication system

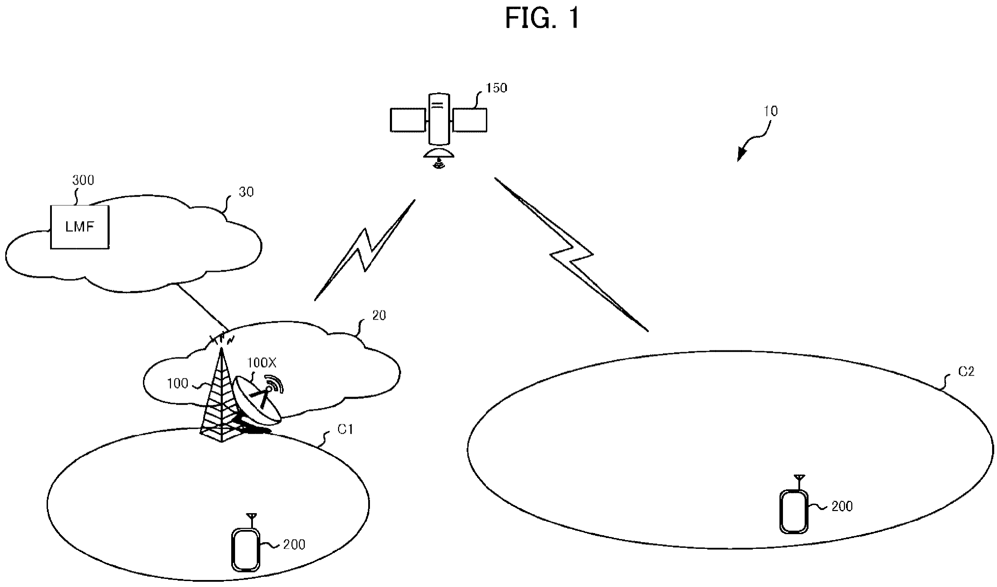

Fig. 1 is an overall schematic configuration diagram of a radio communication system 10 according to an embodiment. The radio communication system 10 is a radio communication system according to 5G New Radio (NR), and includes a Next Generation-Radio Access Network 20 (hereinafter, NG-RAN 20) and a terminal 200 (hereinafter, User Equipment (UE) 200).

Note that, the radio communication system 10 may be a radio communication system according to a scheme called Beyond 5G, 5G Evolution, or 6G.

The NG-RAN 20 includes a base station 100 (hereinafter, gNB 100). Note that, the specific configuration of the radio communication system 10 including the number of gNBs 100 and UEs 200 is not limited to that of the example illustrated in Fig. 1.

The NG-RAN 20 actually includes multiple NG-RAN Nodes, specifically, gNBs (or ng-eNBs), and is connected to a core network 30 (for example, 5GC) according to 5G. Note that, the NG-RAN 20 and the core network 30 may be simply expressed as a "network".

The gNB 100 is a radio base station according to 5G, and performs radio communication with the UE 200 according to 5G. The gNB 100 and the UE 200 can be compatible with Massive MIMO (Multiple-Input Multiple-Output) that generates a beam BM with higher directivity by controlling radio signals transmitted from multiple antenna elements, carrier aggregation (CA) that uses multiple component carriers (CCs) in a bundle, dual connectivity (DC) that communicates with two or more transport blocks at the same time between the UE and each of two NG-RAN Nodes, and the like.

The core network 30 includes a network device 300. The network device 300 may include an LMF (Location Management Function) . The network device 300 may include an AMF (Access and Mobility management Function). The network device 300 may be an E-SMLC (Evolved Serving Mobile Location Centre). In the following description, a case in which the network device 300 is an LMF 300 will be mainly described.

In the embodiment, a non-terrestrial network (hereinafter, NTN) is assumed. In the NTN, an artificial satellite 150 (hereinafter, satellite 150) or the like is used to provide services to areas that cannot be covered by a terrestrial network (hereinafter, TN) for reasons such as cost. The NTN can provide more reliable services. For example, the NTN is assumed to be applied to IoT (inter of things), ships, buses, trains, and critical communications. Further, the NTN has scalability according to efficient multicasting or broadcasting.

Note that, the network including the gNB 100 and the UE 200, but not including the satellite 150, may be referred to as a terrestrial network (TN) in contrast to the NTN.

The gNB 100 has an NTN gateway 100X. The NTN gateway 100X transmits downlink signals to the satellite 150. The NTN gateway 100X receives uplink signals from the satellite 150. The gNB 100 has a cell C1 as a coverage area.

The satellite 150 relays the downlink signals received from the NTN gateway 100X to the UE 200. The satellite 150 relays the uplink signals received from the UE 200 to the NTN gateway 100X. The satellite 150 has a cell C2 as a coverage area. The satellite 150 may be considered to be a TRP (Transmission-Reception Point).

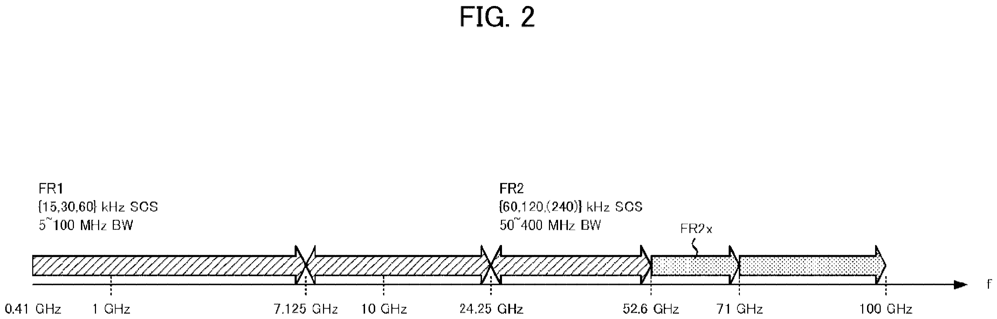

In addition, the radio communication system 10 is compatible with multiple frequency ranges (FRs). Fig. 2 is a diagram illustrating frequency ranges used in the radio communication system 10.

As illustrated in Fig. 2, the radio communication system 10 is compatible with an FR1 and an FR2. The frequency bands of the respective FRs are as follows.

- FR1: 410 MHz to 7.125 GHz
- FR2: 24.25 GHz to 52.6 GHz

In the FR1, Sub-Carrier Spacing (SCS) of 15, 30, or 60 kHz may be used, and a bandwidth (BW) of 5 to 100 MHz may be used. The FR2 has a higher frequency than the FR1, and the SCS of 60 or 120 kHz (240 kHz may be included) may be used, and the bandwidth (BW) of 50 to 400 MHz may be used.

Note that, the SCS may be interpreted as numerology. The numerology is defined in 3GPP TS38.300 and corresponds to one sub-carrier spacing in a frequency domain.

Further, the radio communication system 10 is also compatible with a higher frequency band than the FR2 frequency band. Specifically, the radio communication system 10 is compatible with a frequency band exceeding 52.6 GHz and up to 71 GHz or 114.25 GHz. Such a high frequency band may be referred to as "FR2x" for convenience.

In order to solve the problem that the influence of phase noise becomes larger in the high frequency band, in the case of using a band exceeding 52.6 GHz, Cyclic Prefix-Orthogonal Frequency Division Multiplexing (CP-OFDM)/ Discrete Fourier Transform-Spread (DFT-S-OFDM) having larger Sub-Carrier Spacing (SCS) may be applied.

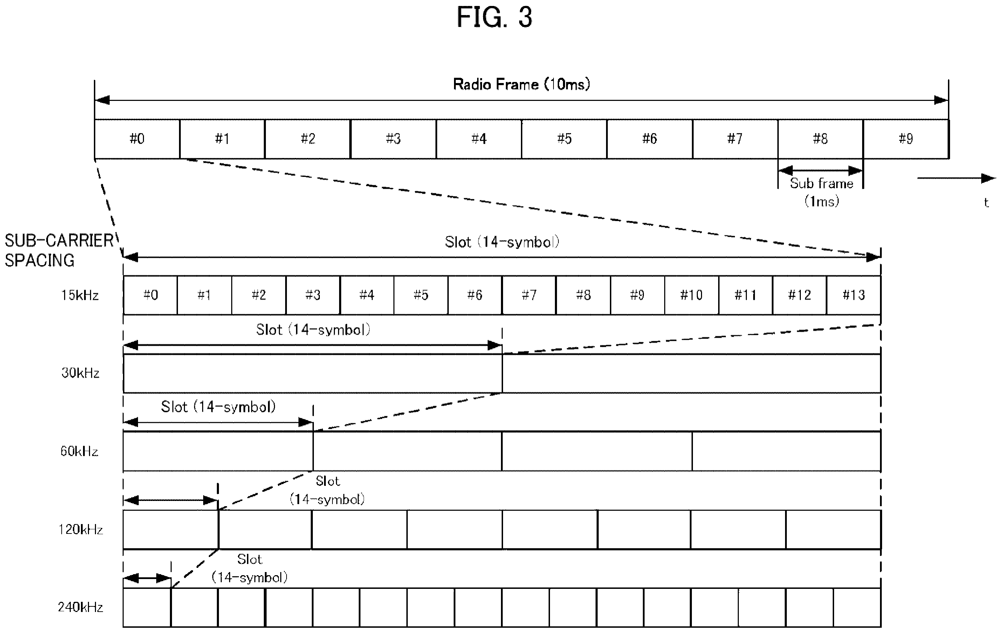

Fig. 3 is a diagram illustrating a configuration example of a radio frame, a subframe, and a slot used in the radio communication system 10.

As illustrated in Fig. 3, one slot includes 14 symbols, and a symbol period (and a slot period) becomes shorter as the SCS becomes larger (wider). The SCS is not limited to the interval (frequency) illustrated in Fig. **3****.** For example, 480 kHz, 960 kHz, or the like may be used.

In addition, the number of symbols constituting one slot is not necessarily 14 symbols (for example, 28 symbols or 56 symbols). Further, the number of slots per subframe may be different depending on the SCS.

Note that, a time direction (t) illustrated in Fig. 3 may be referred to as a time domain, a symbol period, a symbol time, or the like. In addition, a frequency direction may be referred to as a frequency domain, a resource block, a subcarrier, a bandwidth part (BWP: Bandwidth Part), or the like.

A DMRS is a kind of reference signal, and is prepared for various channels. Here, unless otherwise specified, it may mean a downlink data channel, specifically, a DMRS for PDSCH (Physical Downlink Shared Channel). However, an uplink data channel, specifically, a DMRS for PUSCH (Physical Uplink Shared Channel) may be construed as being similar to a DMRS for PDSCH.

The DMRS may be used in a device, for example, in the UE 200 for channel estimation as a part of coherent demodulation. The DMRS may exist only in resource blocks (RBs) used for PDSCH transmission.

The DMRS may have multiple mapping types. Specifically, the DMRS has a mapping type A and a mapping type B. In the mapping type A, the first DMRS is allocated in the second or third symbol of a slot. In the mapping type A, the DMRS may be mapped based on a boundary between slots regardless of where the actual data transmission starts in a slot. The reason why the first DMRS is allocated in the second or third symbol of a slot may be construed as for the purpose of allocating the first DMRS after control resource sets (CORESET).

In the mapping type B, the first DMRS may be allocated in the first symbol of data assignment. In other words, the DMRS may be given relatively to a location where data is allocated, not to the boundary between slots.

Further, the DMRS may have multiple types (Types). Specifically, the DMRS has a Type 1 and a Type 2. The Type 1 and Type 2 are different in mapping in a frequency domain and the maximum number of orthogonal reference signals. The Type 1 can output up to four orthogonal signals in a single-symbol DMRS, and the Type 2 can output up to eight orthogonal signals in a double-symbol DMRS.

### (2) Functional block configuration of radio communication system

Next, a functional block configuration of the radio communication system 10 will be described.

First, a functional block configuration of the UE 200 will be described.

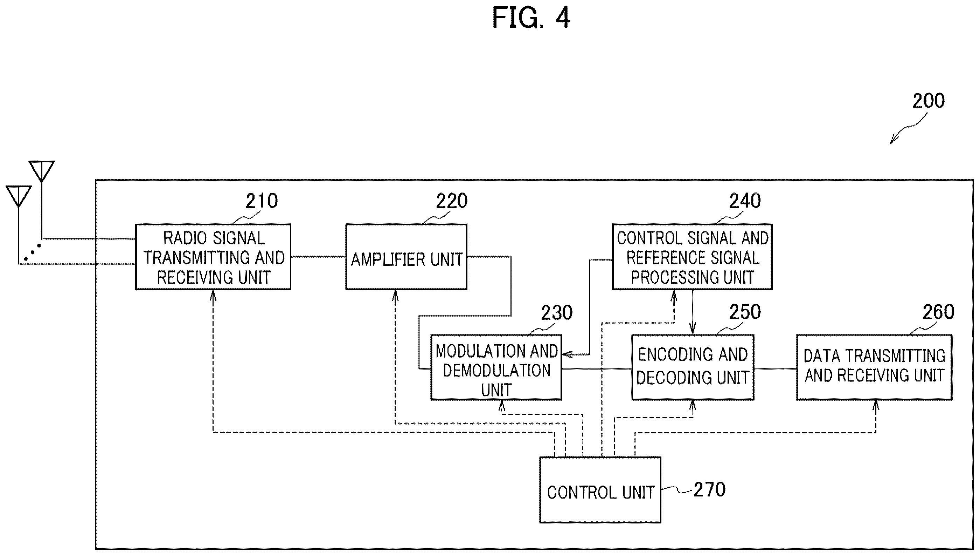

Fig. 4 is a functional block diagram of the UE 200. As illustrated in Fig. 4, the UE 200 includes a radio signal transmitting and receiving unit 210, an amplifier unit 220, a modulation and demodulation unit 230, a control signal and reference signal processing unit 240, an encoding and decoding unit 250, a data transmitting and receiving unit 260, and a control unit 270.

The radio signal transmitting and receiving unit 210 transmits and receives a radio signal according to NR. The radio signal transmitting and receiving unit 210 deals with Massive MIMO, CA that uses multiple component carriers (CCs) in a bundle, DC that performs communication at the same time between the UE and each of two NG-RAN Nodes, and the like.

The amplifier unit 220 includes a PA (Power Amplifier)/LNA (Low Noise Amplifier) and the like. The amplifier unit 220 amplifies a signal output from the modulation and demodulation unit 230 to a predetermined power level. In addition, the amplifier unit 220 amplifies an RF signal output from the radio signal transmitting and receiving unit 210.

The modulation and demodulation unit 230 executes data modulation and demodulation, transmission power setting, resource block assignment, and the like for each predetermined communication destination (gNB 100 or another gNB). In the modulation and demodulation unit 230, Cyclic Prefix-Orthogonal Frequency Division Multiplexing (CP-OFDM)/Discrete Fourier Transform-Spread (DFT-S-OFDM) may be applied. Further, DFT-S-OFDM may be used not only for uplink (UL) but also for downlink (DL).

The control signal and reference signal processing unit 240 executes processing relating to various control signals transmitted and received by the UE 200, and processing relating to various reference signals transmitted and received by the UE 200.

Specifically, the control signal and reference signal processing unit 240 receives various control signals transmitted from the gNB 100 via a predetermined control channel, for example, a control signal of a radio resource control layer (RRC). Further, the control signal and reference signal processing unit 240 transmits various control signals to the gNB 100 via a predetermined control channel.

The control signal and reference signal processing unit 240 executes processing using a reference signal (RS) such as a Demodulation Reference Signal (DMRS) and a Phase Tracking Reference Signal (PTRS).

The DMRS is a known terminal-specific reference signal (pilot signal) between the base station and the terminal for estimating a fading channel used for data demodulation. The PTRS is a terminal-specific reference signal designed for the purpose of estimating phase noise that becomes a problem in a high frequency band.

Note that, the reference signal may include a Channel State Information-Reference Signal (CSI-RS), a Sounding Reference Signal (SRS), and a Positioning Reference Signal (PRS) for location information, in addition to the DMRS and the PTRS.

In addition, the channel includes a control channel and a data channel. The control channel includes a PDCCH (Physical Downlink Control Channel), a PUCCH (Physical Uplink Control Channel), a RACH (Random Access Channel), Downlink Control Information (DCI) including a Random Access Radio Network Temporary Identifier (RA-RNTI), a Physical Broadcast Channel (PBCH), and the like.

In addition, the data channel includes a PDSCH (Physical Downlink Shared Channel), a PUSCH (Physical Uplink Shared Channel), and the like. The data means the data transmitted via the data channel. The data channel may be read as a shared channel.

Here, the control signal and reference signal processing unit 240 may receive downlink control information (DCI). The DCI includes, as existing fields, fields for storing DCI Formats, Carrier indicator (CI), BWP indicator, FDRA (Frequency Domain Resource Assignment), TDRA (Time Domain Resource Assignment), MCS (Modulation and Coding Scheme), HPN (HARQ Process Number), NDI (New Data Indicator), RV (Redundancy Version), and the like.

A value stored in the DCI Format field is an information element specifying the format of the DCI. A value stored in the CI field is an information element specifying a CC for which the DCI is applied. A value stored in the BWP indicator field is an information element specifying a BWP for which the DCI is applied. The BWP that can be specified by the BWP indicator is configured by an information element (BandwidthPart-Config) included in an RRC message. A value stored in the FDRA field is an information element specifying a frequency domain resource for which the DCI is applied. The frequency domain resource is identified by a value stored in the FDRA field and an information element (RA Type) included in the RRC message. A value stored in the TDRA field is an information element specifying a time domain resource for which the DCI is applied. The time domain resource is identified by a value stored in the TDRA field and an information element (pdsch-TimeDomainAllocationList, pusch-TimeDomainAllocationList) included in the RRC message. The time domain resource may be identified by a value stored in the TDRA field and a default table. A value stored in the MCS field is an information element specifying an MCS for which the DCI is applied. The MCS is identified by a value stored in the MCS and an MCS table. The MCS table may be specified by the RRC message, or may be identified by RNTI scrambling. A value stored in the HPN field is an information element specifying a HARQ Process for which the DCI is applied. A value stored in the NDI is an information element for identifying whether data for which the DCI is applied is first transmission data. A value stored in the RV field is an information element specifying redundancy of data for which the DCI is applied.

In the embodiment, the control signal and reference signal processing unit 240 constitutes a receiving unit that receives a downlink reference signal via the NTN. The downlink reference signal may be referred to as a DL-PRS (Downlink Positioning Reference Signal). The control signal and reference signal processing unit 240 may transmit an uplink reference signal via the NTN. The uplink reference signal may be referred to as a UL-SRS (Sounding Reference Signal).

The encoding and decoding unit 250 performs data division and coupling, channel coding and decoding, and the like for each predetermined communication destination (gNB 100 or another gNB).

Specifically, the encoding and decoding unit 250 divides data output from the data transmitting and receiving unit 260 into predetermined sizes, and performs channel coding on the divided data. Further, the encoding and decoding unit 250 decodes data output from the modulation and demodulation unit 230 and couples the decoded data.

The data transmitting and receiving unit 260 transmits and receives a Protocol Data Unit (PDU) and a Service Data Unit (SDU). Specifically, the data transmitting and receiving unit 260 performs assembly and disassembly of the PDU and SDU in multiple layers (a media access control layer (MAC), a radio link control layer (RLC), a packet data convergence protocol layer (PDCP), and the like). In addition, the data transmitting and receiving unit 260 executes error correction and retransmission control of data on the basis of HARQ (Hybrid Automatic Repeat Request).

The control unit 270 controls each functional block constituting the UE 200. In the embodiment, the control unit 270 constitutes a control unit that controls a report of a measurement result regarding the DL-PRS in specific control (hereinafter, first specific control) of estimating the location information of the UE 200 based on the DL-PRS. The measurement result may be reported to the LMF 300 via the satellite 150 and the gNB 100. The first specific control may be OTDOA (Observed Time Difference Of Arrival) Positioning using the DL-PRS, or may be a part of Multi-RTT (Round Trip Time) Positioning.

Here, in estimating the location information of the UE 200 in the NTN (also referred to as NTN verification), the control unit 270 assumes information regarding the location information of the UE 200 with a definition different from that in the TN. In the Multi-RTT Positioning, the information regarding the location information of the UE 200 may include a time difference (hereinafter, UE Rx-Tx time difference) between the reception timing and the transmission timing regarding the DL-PRS. The OTDOA Positioning using the DL-PRS may include a time difference (hereinafter, DL-RSTD (Downlink Reference Signal Time Difference)) between the reception timings of two DL-PRSs.

Note that the control unit 270 may assume specific control (hereinafter, second specific control) of estimating the location information of the UE 200 based on the UL-SRS. The second specific control may be OTDOA Positioning using the UL-SRS, or may be a part of Multi-RTT Positioning.

Secondly, a functional block configuration of the gNB 100 will be described.

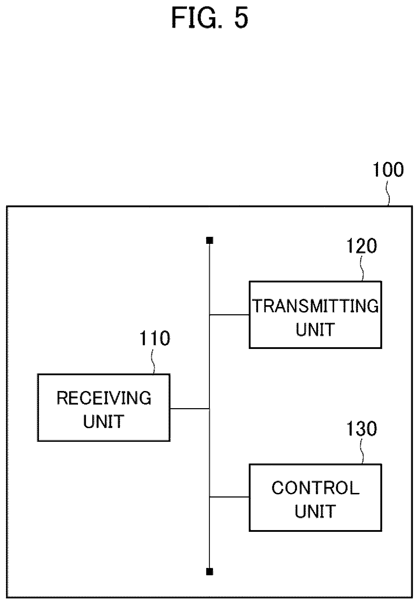

Fig. 5 is a functional block configuration diagram of the gNB 100. As illustrated in Fig. 5, the gNB 100 includes a receiving unit 110, a transmitting unit 120, and a control unit 130.

The receiving unit 110 receives various signals from the UE 200. The receiving unit 110 may receive an UL signal via the PUCCH or the PUSCH. In the embodiment, the receiving unit 110 constitutes a receiving unit that receives the UL-SRS via the NTN.

The transmitting unit 120 transmits various signals to the UE 200. The transmitting unit 120 may transmit a DL signal via the PDCCH or the PDSCH. The transmitting unit 120 may transmit a DL-PRS via the NTN.

The control unit 130 controls the gNB 100. In the embodiment, the control unit 130 constitutes a control unit that controls a report of a measurement result regarding the UL-SRS in specific control (second specific control) of estimating the location information of the UE 200 based on the UL-SRS. The control unit 130 may assume specific control (first specific control) of estimating the location information of the UE 200 based on the DL-PRS.

Here, in estimating the location information of the UE 200 in the NTN (NTN verification), the control unit 130 assumes information regarding the location information of the UE 200 with a definition different from that in the TN. In the Multi-RTT Positioning, the information regarding the location information of the UE 200 may include a time difference (hereinafter, gNB Rx-Tx time difference) between the reception timing and the transmission timing regarding the UL-SRS. The OTDOA Positioning using the UL-SRS may include a time difference (hereinafter, UL-RTOA (Uplink Relative Time of Arrival))) between the reception timings of two UL-SRSs.

Thirdly, a functional block configuration of the LMF 300 will be described.

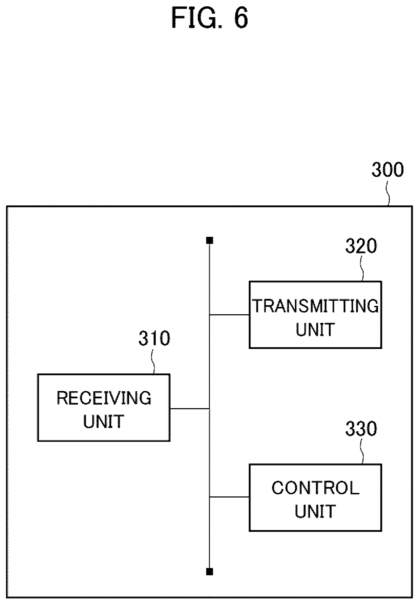

Fig. 6 is a functional block configuration diagram of the LMF 300. As illustrated in Fig. 6, the LMF 300 includes a receiving unit 310, a transmitting unit 320, and a control unit 330.

The receiving unit 310 may receive a message such as a measurement result regarding the first specific control from the UE 200. The message may be referred to as LPP Provide Location Information. The receiving unit 310 may receive a message such as a measurement result regarding the second specific control from the gNB 100. The message may be referred to as an NRPPa (NR Positioning Protocol A) message (Type: Measurement Report). The receiving unit 310 may receive a message for use in measurement regarding the second specific control from the gNB 100. The message may be referred to as an NRPPa message (Type: POSITIONING INFORMATION REQUEST).

The transmitting unit 320 may transmit a message for use in measurement regarding the first specific control to the UE 200. The message may be referred to as LPP Provide Assistance Data. The transmitting unit 320 may transmit a message requesting measurement regarding the second specific control to the gNB 100. The message may be referred to as an NRPPa message (Type: Measurement Request).

The control unit 330 controls the LMF 300. The control unit 330 may assume specific control (first specific control) of estimating the location information of the UE 200 based on two or more DL-PRSs. The control unit 330 may assume specific control (second specific control) of estimating the location information of the UE 200 based on two or more UL-SRSs.

### (3) Summary of problems

Next, problems of the embodiment will be described. As described above, in the NTN, the DL-PRS and/or the UL-SRS are relayed by the satellite 150. However, in the NTN, a case is assumed in which it is difficult to capture a plurality of TRPs (for example, a satellite or the like that relays between the base station and the UE) and it is necessary to estimate the location information of the UE using one TRP.

Under such a background, as a result of intensive studies, the inventors have found that it is not possible to appropriately estimate the location information of the UE 200 when the UE/gNB Rx-Tx time difference, DL-RSTD, and UL-RTOA are defined (also referred to as Legacy definition) in the same manner as in the TN (Terrestrial Network).

### (4) Specific control

Next, the specific control of the embodiment will be described. Here, the first specific control for estimating the location information of the UE 200 based on two or more DL-PRSs/or UL-SRSs will be exemplified as the specific control.

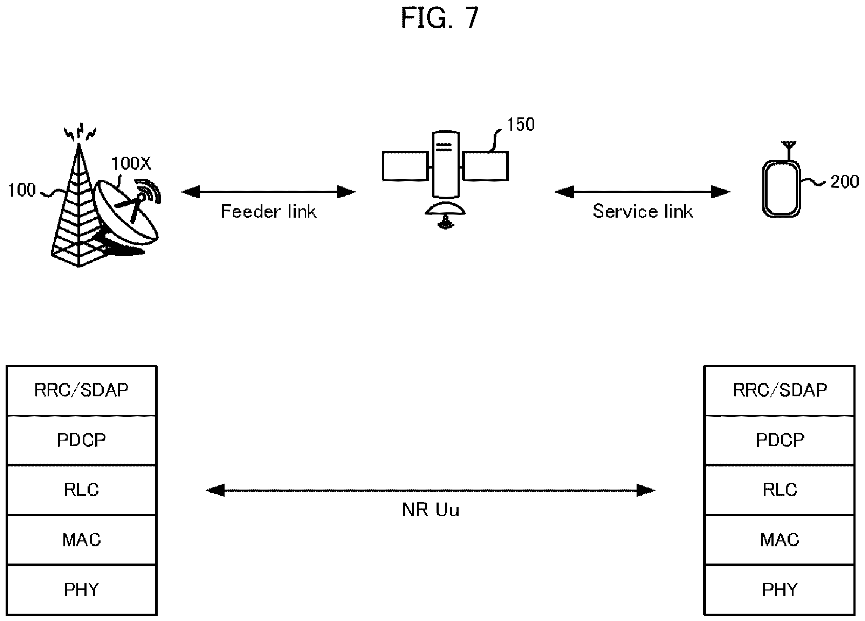

Firstly, a protocol will be described. As illustrated in Fig. 7, the gNB 100 has a protocol stack such as PHY, MAC, RLC, PDCP, and RRC/SDAP. Similarly, the UE 200 has a protocol stack such as PHY, MAC, RLC, PDCP, and RRC/SDAP. The satellite 150 relays communication between the gNB 100 and the UE 200.

Here, a link between the gNB 100 (NTN gateway 100X) and the satellite 150 may be referred to as a Feeder link. The link between the satellite 150 and the UE 200 may be referred to as a Service link. The interface between the gNB 100 and the UE 200 may be referred to as an NR Uu.

Note that FDD or TDD may be adopted as an assumption of the network architecture of the NTN. The cells on the ground may be stationary or movable. The UE 200 may have a capability corresponding to a GNSS (Global Navigation Satellite System). As the UE 200, in FR1, a power class 3 handheld device may be assumed, and at least in FR2, VSAT (Very small aperture terminal) may be assumed.

The network architecture of the NTN may assume a regenerative payload. For example, the function of the gNB 100 may be mounted on a satellite or a flying object. In addition, a gNB-DU (Distributed Unit) may be mounted on a satellite or a flying object, and a gNB-CU (Central Unit) may be arranged as a ground station.

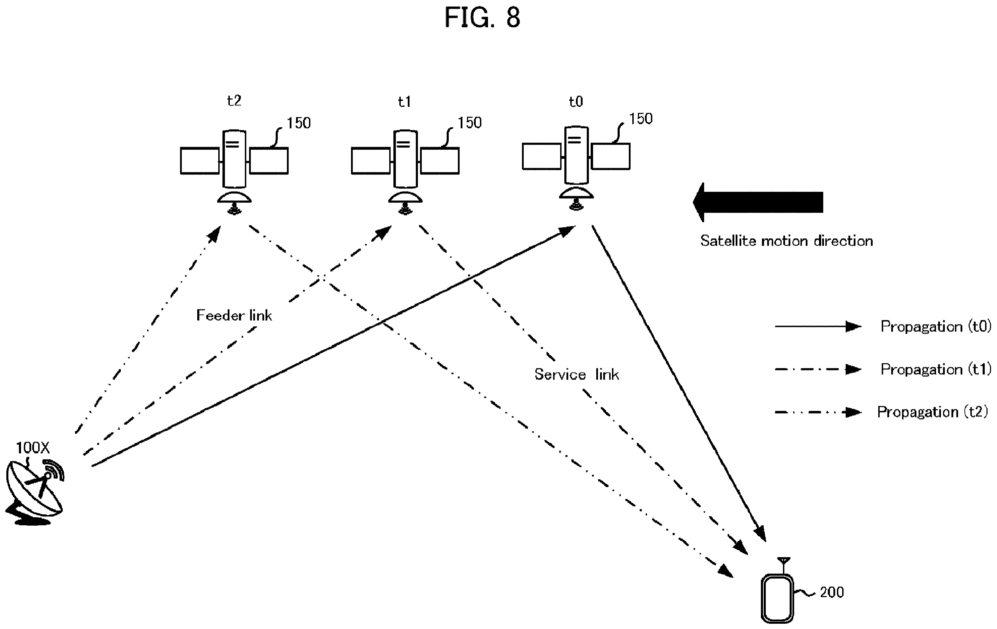

Secondly, the first specific control will be described. As illustrated in Fig. 8, it is assumed that the satellite 150 moves on a satellite orbit or the like. That is, it is assumed that the location of the satellite 150 at time t0, the location of the satellite 150 at time t1, and the location of the satellite 150 at time t2 are different.

Here, the UE 200 controls the report of the measurement result regarding each of the two or more DL-PRSs in the first specific control. The measurement result may include NTN-RSTD (Reference Signal Time Difference). The NTN-RSTD is a difference between the time when the UE 200 receives a reference reference signal (reference PRS) and the time when the UE 200 receives a target reference signal (target PRS). For example, a case where DL-PRS(t0) transmitted at time t0 is the reference PRS, and DL-PRS(t1) transmitted at time t1 and DL-PRS(t2) transmitted at time t2 are the target PRSs will be exemplified. Note that t0, t1, and t2 may be transmission times of the DL-PRS in the gNB 100, may be transmission times of the DL-PRS in the satellite 150, may be reception times of the DL-PRS in the UE 200, or may be times determined on the basis of these.

The UE 200 can measure NTN-RSTD(t1, t0) at the time corresponding to time t1 as the NTN-RSTD (Reference Signal Time Difference). The NTN-RSTD(t1, t0) may be represented by (Service link propagation delay(t1) + Feeder link propagation delay(t1)) - (Service link propagation delay(t0) + Feeder link propagation delay(t0)). Similarly, the UE 200 can measure NTN-RSTD(t2, t0) at the time corresponding to time t2 as the NTN-RSTD. The NTN-RSTD(t2, t0) may be represented by (Service link propagation delay(t2) + Feeder link propagation delay(t2)) - (Service link propagation delay(t0) + Feeder link propagation delay(t0)). Note that the UE 200 may report each of the Service link propagation delay and the Feeder link propagation delay to the gNB 100 or the LMF 300, and may report the sum of the Service link propagation delay and the Feeder link propagation delay to the gNB 100 or the LMF 300. In addition, the NTN-RSTD may be reported to the gNB 100 or the LMF 300.

Note that Service link propagation delay(tx) is a Service link propagation delay corresponding to time tx. Feeder link propagation delay (ty) is a Feeder link propagation delay corresponding to time ty. Feeder link propagation delay(t0) may be referred to as Reference propagation delay(t0) .

Although not particularly limited, the Feeder link propagation delay(ty) may be reported by the gNB 100. For example, the Feeder link propagation delay(ty) may be identified using a one way-propagation delay through an NRPPa message reporting a delay between the gNB 100 and the satellite 150, distance reporting, a sum of K_mac, common TA(N_{TA,common}), or the like. K_mac may be a parameter for determining an application timing of the configuration received by the MAC-CE. Alternatively, the gNB 100 may report the geographic location of the NTN gateway 100X to the LMF 300. The LMF 300 may specify the Feeder link propagation delay(ty) based on the distance between the NTN gateway 100X and the satellite 150. The location of the satellite 150 may be reported from the gNB 100 to the LMF 300. The location of the satellite 150 may be specified based on the location/orbit information of the satellite 150 reported from the gNB 100 to the LMF 300.

Here, the first specific control of estimating the location information of the UE 200 based on two or more DL-PRSs has been exemplified, but the same applies to the second specific control of estimating the location information of the UE 200 based on two or more UL-SRSs. That is, the above-described specific controls can be applied to the OTDOA Positioning using the DL-PRS, OTDOA Positioning using the UL-SRS, and Multi-RTT Positioning.

For example, in the OTDOA Positioning using the DL-PRS, the operation described below may be executed. Specifically, taking the case illustrated in Fig. 8 as an example, the UE 200 may measure NTN-RSTD(t1, t0) at time t1 and measure NTN-RSTD(t2, t0) at time t2.

The measurement result includes time information related to the reference PRS that is one of the two or more DL-PRSs. The time information may be referred to as NTN-timestamp-r18. The NTN-timestamp-r18 may be information indicating the time when the UE 200 receives the reference PRS. The NTN-RSTD may be the difference between NTN-timestamp-r18 and nr-TimeStamp-r16. The format of the NTN-timestamp-r18 may be similar to the format of the existing nr-TimeStamp-r16.

For example, taking the case illustrated in Fig. 8 as an example, the UE 200 includes the time information related to the reference PRS(t0) in the measurement result including NTN-RSTD(t1, t0). Similarly, the UE 200 includes the time information related to the reference PRS(t0) in the measurement result including NTN-RSTD(t2, t0).

### (5) UE/gNB Rx-Tx time difference

Next, Problem 1 and Operation Example 1 regarding the UE/gNB Rx-Tx time difference will be described. The UE/gNB Rx-Tx time difference may be information related to Multi-RTT Positioning.

### (5.1) Problem 1

First, in the TN, the UE Rx-Tx time difference is defined by T_{UE-PX} - T_{UE-TX}. The T_{UE-RX} is a timing at which the UE 200 receives the DL-PRS from the Transmission Point (TP) in DL subframe #i. The T_{UE-TX} is a timing at which the UE 200 transmits the uplink signal in a UL subframe #j closest to DL subframe #i. The UE Rx-Tx time difference may be information defined in §5.1.30 "UE Rx-Tx time difference" of 3GPP TS38.215 V17.3.0.

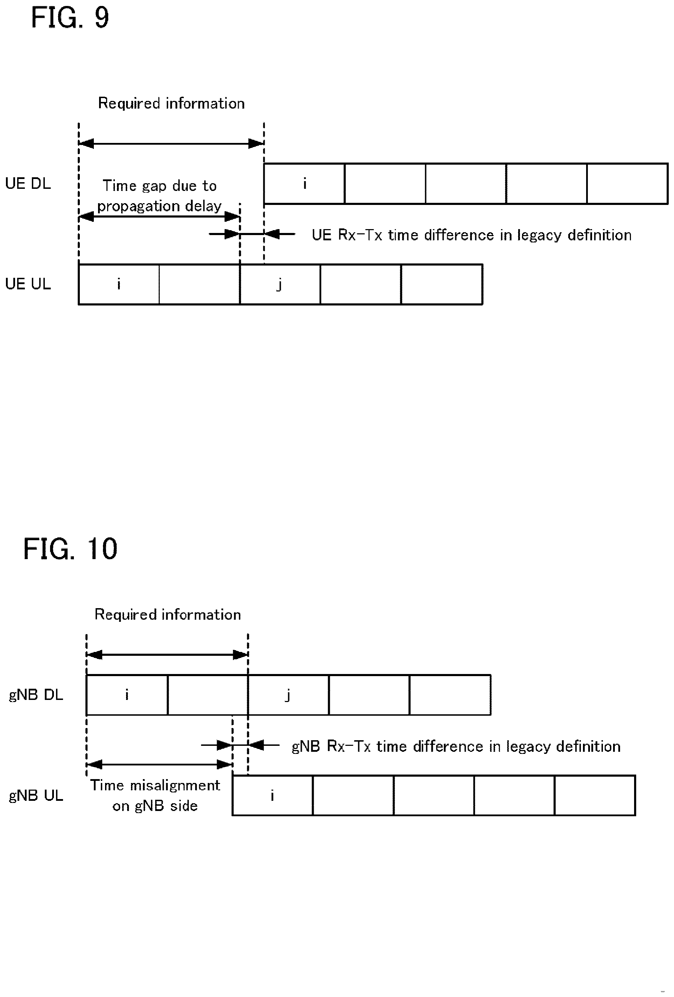

However, in the NTN, a propagation delay between the gNB 100 and the UE 200 is large, and there is a possibility that DL frames and UL frames are not aligned in the gNB 100. Accordingly, as illustrated in Fig. 9, in the NTN, even when the UE Rx-Tx time difference defined in the TN is used, a gap due to the propagation delay is not reflected, and necessary information cannot be obtained.

Secondly, in the TN, the gNB time difference is defined by T_{gNB-RX} - T_{GNB-TX}. The T_{gNB-RX} is a timing at which the gNB 100 receives an SRS in UL subframe #i including the SRS associated with the UE 200. The T_{gNB-TX} is a timing at which the gNB 200 transmits a downlink signal in DL subframe #j closest to UL subframe #i. The gNB Rx-Tx time difference may be information defined in §5.2.3 "gNB Rx-Tx time difference" of 3GPP TS38.215 V17.3.0.

However, in the NTN, a propagation delay between the gNB 100 and the UE 200 is large, and there is a possibility that DL frames and UL frames are not aligned in the gNB 100. Accordingly, as illustrated in Fig. 10, in the NTN, even when the UE Rx-Tx time difference defined in the TN is used, a gap between DL frames and UL frames in the gNB 100 is not reflected, and necessary information cannot be obtained.

### (5.2) Operation Example 1

In order to solve Problem 1 described above, Operation Example 1 described below may be adopted. In Operation Example 1 described below, the definition of the UE/gNB time difference used in the NTN will be described. The definition of the UE/gNB time difference used in the NTN may be different from the definition of the UE/gNB time difference used in the TN.

Firstly, the definition of the UE time difference will be described.

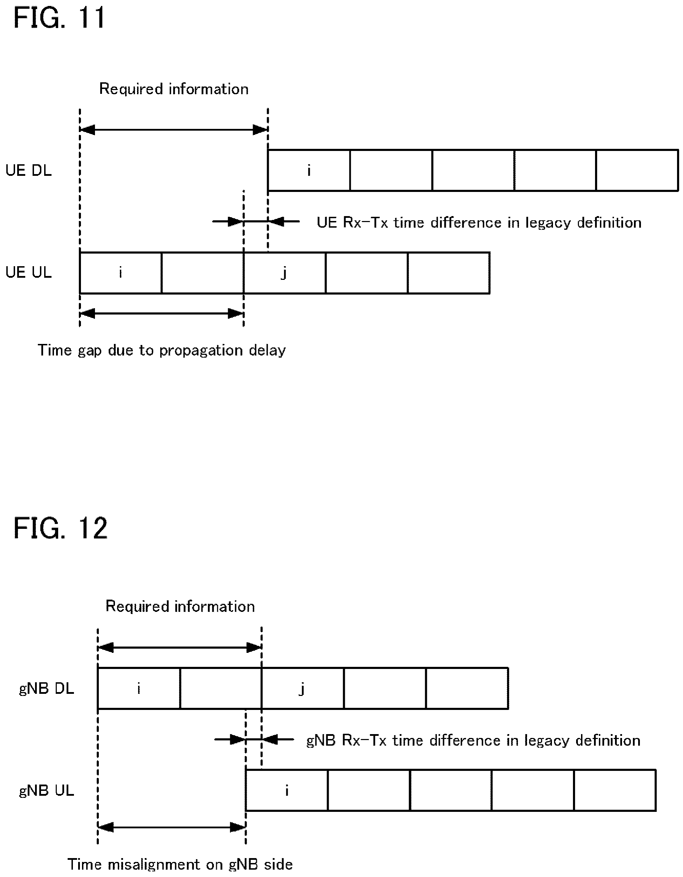

The UE time difference may be defined by a time offset in addition to the UE time difference used in the TN. As illustrated in Fig. 11, it is sufficient if the time offset is information that can specify a difference (in Fig. 11, Time gap due to propagation delay) between DL subframe #i and UL subframe #j. As the time offset, the options described below are conceivable.

In Option 1-1, the UE 200 may report an SFN (System Frame Number) of DL subframe #i and an SFN of UL subframe #j to the LMF 300 as time offsets. The UE 200 may report a subframe number of DL subframe #i and a subframe number of UL subframe #j to the LMF 300 as time offsets. The UE 200 may report an index of DL subframe #i and an index of UL subframe #j to the LMF 300 as time offsets. Note that the UE 200 may report a combination of two or more parameters selected from the SFN, the subframe number, and the index.

In Option 1-2, the UE 200 may report a time gap between the UL subframe corresponding to DL subframe #i and UL subframe #j to the LMF 300 as a time offset. The UE 200 may report a difference in SFN between the UL subframe corresponding to DL subframe #i and UL subframe #j to the LMF 300 as a time offset. The UE 200 may report a difference in subframe number between the UL subframe corresponding to DL subframe #i and UL subframe #j to the LMF 300 as a time offset. The UE 200 may report a difference in index between the UL subframe corresponding to DL subframe #i and UL subframe #j to the LMF 300 as a time offset. Note that the UE 200 may report a combination of two or more parameters selected from the time gap, the difference in SFN, the difference in subframe number, and the difference in index.

In Option 1-3, the UE 200 may calculate UE-specific TA by itself and report the calculated UE-specific TA to the LMF 300 as a time offset. As the UE-specific TA to be reported, UE-specific TA that is finer than the UE-specific TA used in the NT may be used.

In Option 1-4, the UE 200 may report the reception time of DL subframe #i and the transmission time of UL subframe #j to the LMF 300 as time offsets.

In Option 1-5, the gNB 100 may report time-related information as a time offset to the LMF 300. The time-related information may be represented by the granularity of X symbol/slot/sub-frame/frame/millisecond/second.

The time-related information may be determined based on the type of the satellite 150 (GEO, LEO, MEO, or the like).

The time-related information may be determined by the height of the satellite 150. The value of X may be larger as the height of the satellite 150 is higher. For example, X1 may be used when the height is 600 to 800 km, and X2 (> X1) may be used when the height is 800 km or more.

The time-related information may be determined by one or more TAs selected from common TA, UE-specific TA, and TA (including common TA and UE specific TA) applied by the UE 200. As the TA, an approximate value of the TA may be used. The value of X may be larger as the TA is larger. For example, X3 may be used when the TA is 0 to 1 s, and X4 (> X3) may be used when the TA is 1 to 2 s.

The time-related information may be determined on the basis of the propagation delay or RTT between the gNB 100 and the satellite 150. The time-related information may be determined on the basis of the propagation delay or RTT between the satellite 150 and the UE 200. The value of X may be larger as the propagation delay or RTT is larger.

In Operation Example 1, the value and the value range of the UE time difference reported from the UE 200 may be represented by the granularity of symbol/slot/sub-frame/frame/millisecond/second. The value and the value range of the UE time difference used in the NTN may be different from the value and the value range of the UE time difference used in the TN.

Secondly, the definition of the gNB time difference will be described.

The gNB time difference may be defined by additional information described below in addition to the gNB time difference used in the TN. As illustrated in Fig. 12, it is sufficient if the information is information that can specify a difference (in Fig. 12, Time misalignment on gNB side) between DL subframe #i and UL subframe #j. As the additional information, the options described below are conceivable.

In Option 2-1, the gNB 100 may report the location of an RP (Reference Point) to the LMF 300 as the additional information.

In Option 2-2, the gNB 100 may report the propagation delay or RTT between the gNB 100 and the RP to the LMF 300 as the additional information. The gNB 100 may report the propagation delay or RTT between the RP and the satellite 150 to the LMF 300 as the additional information.

In Option 2-3, the gNB 100 may report a time difference corresponding to the gNB 100 and the RP to the LMF 300 as the additional information.

In Option 2-4, the gNB 100 may report the SFN of UL subframe #i and the SFN of DL subframe #j to the LMF 300 as the additional information. The gNB 100 may report the subframe number of UL subframe #i and the subframe number of DL subframe #j to the LMF 300 as the additional information. The gNB 100 may report the index of UL subframe #i and the index of DL subframe #j to the LMF 300 as the additional information. Note that the gNB 100 may report a combination of two or more parameters selected from the SFN, the subframe number, and the index.

In Option 2-5, the gNB 100 may report the time gap between the DL subframe corresponding to UL subframe #i and DL subframe #j to the LMF 300 as the additional information. The gNB 100 may report the difference in SFN between the DL subframe corresponding to UL subframe #i and DL subframe #j to the LMF 300 as the additional information. The gNB 100 may report the difference in subframe number between the DL subframe corresponding to UL subframe #i and DL subframe #j to the LMF 300 as the additional information. The gNB 100 may report the difference in index between the DL subframe corresponding to UL subframe #i and DL subframe #j to the LMF 300 as the additional information. Note that the gNB 100 may report a combination of two or more parameters selected from the time gap, the difference in SFN, the difference in subframe number, and the difference in index.

In Option 2-6, the gNB 100 may report the reception time of UL subframe #i and the transmission time of DL subframe #j to the LMF 300 as the additional information.

In Option 2-7, the gNB 100 may report the time-related information as the additional information to the LMF 300. The time-related information may be represented by the granularity of X symbol/slot/sub-frame/frame/millisecond/second.

The time-related information may be determined based on the type of the satellite 150 (GEO, LEO, MEO, or the like).

The time-related information may be determined by the height of the satellite 150. The value of X may be larger as the height of the satellite 150 is higher. For example, X1 may be used when the height is 600 to 800 km, and X2 (> X1) may be used when the height is 800 km or more.

The time-related information may be determined by one or more TAs selected from common TA and TA (including common TA and UE specific TA) applied by the UE 200. As the TA, an approximate value of the TA may be used. The value of X may be larger as the TA is larger. For example, X3 may be used when the TA is 0 to 1 s, and X4 (> X3) may be used when the TA is 1 to 2 s.

The time-related information may be determined on the basis of the propagation delay or RTT between the gNB100 and the RP. The time-related information may be determined on the basis of the propagation delay or RTT between the RP and the satellite 150. The value of X may be larger as the propagation delay or RTT is larger.

In Operation Example 1, the value and the value range of the gNB time difference reported from the gNB 100 may be represented by the granularity of symbol/slot/sub-frame/frame/millisecond/second. The value and the value range of the gNB time difference used in the NTN may be different from the value and the value range of the gNB time difference used in the TN.

In Operation Example 1, the RP may be a Reference Point at which DL/UL are synchronized. The RP is the location for defining common TA, and may be provided on the Feeder link.

### (6) DL-RSTD

Next, Problem 2 and Operation Example 2 regarding the DL-RSTD will be described. The DL-RSTD may be information related to Multi-RTT Positioning. It may be information related to DL-TDOA Positioning.

### (6.1) Problem 2

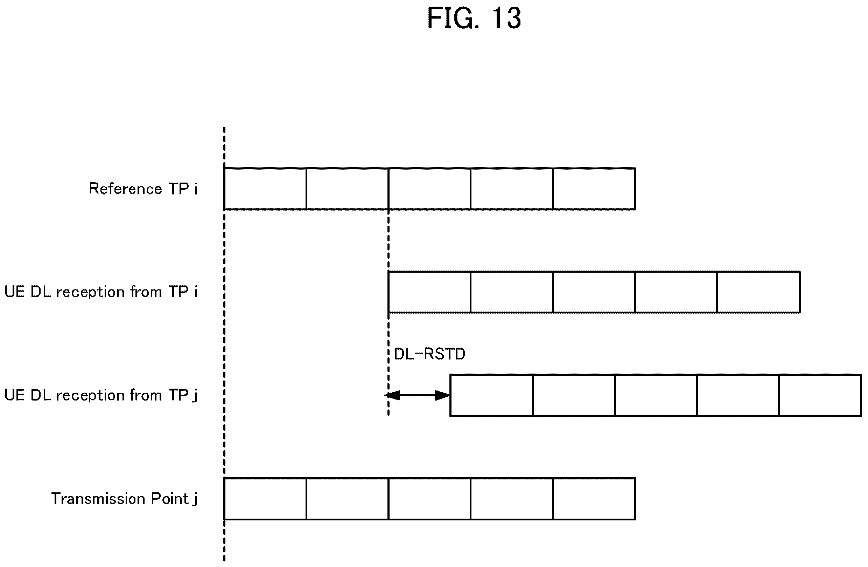

In the TN, as illustrated in Fig. 13, the DL-RSTD is a relative timing difference of DL between a TP (Transmission Point) j and a reference TPi. The DL-RSTD is defined by T_{SubframeRxj} - T_{SubframeRxi}. The T_{SubframeRxj} is the start time of the subframe in which the UE 200 receives the DL-PRS from the TPj. The T_{SubframeRxi} is the start time of the subframe temporally closest to the subframe in which the UE 200 receives the DL-PRS from the TPj. It is assumed that TPs (that is, the TPj and the reference TPi) are synchronized with each other. The DL-RSTD may be information defined in §5.1.29 "DL reference signal time difference (DL RSTD)" of 3GPP TS38.215 V17.3.0.

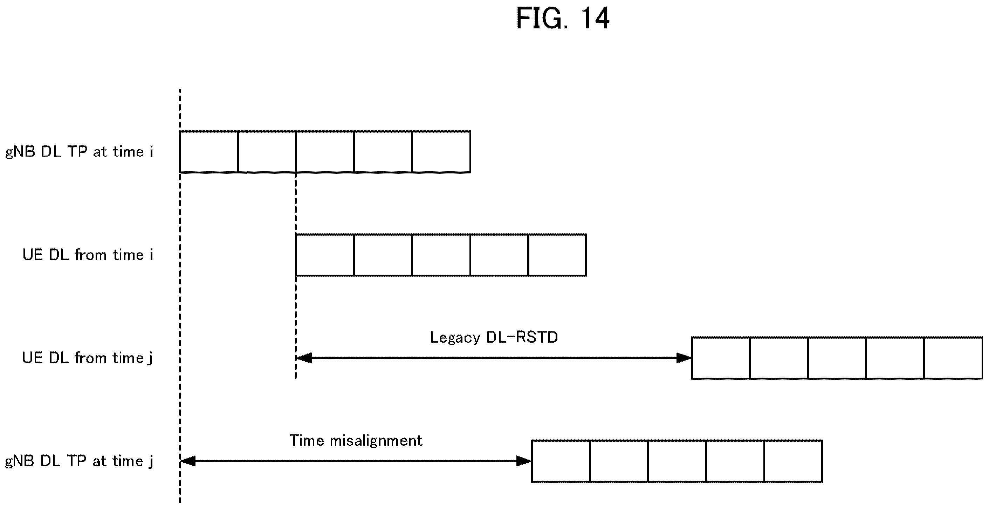

However, in the NTN, as illustrated in Fig. 14, the reference TPi and TPj do not exist, and a time difference between DL-PRSs received at different timings from the same TP via one satellite existing at different locations is measured. In the DL-TDOA Positioning, temporal synchronization is requested, but in the NTN, since a temporal lag occurs, the definition of the DL-RSTD used in the TN cannot be used.

### (6.2) Operation Example 2

In order to solve Problem 2 described above, Operation Example 2 described below may be adopted. In Operation Example 2 described below, the definition of the DL-RSTD used in the NTN will be described. The definition of the DL-RSTD used in the NTN may be different from the definition of the DL-RSTD used in the TN. As the DL-RSTD, the options described below are conceivable.

In Option 1, the DL-RSTD is defined by a time period until the DL-PRS is transmitted from the TRP at time j and received by the UE 200 and a time period until the DL-PRS is transmitted from the TRP at time i and received by the UE 200.

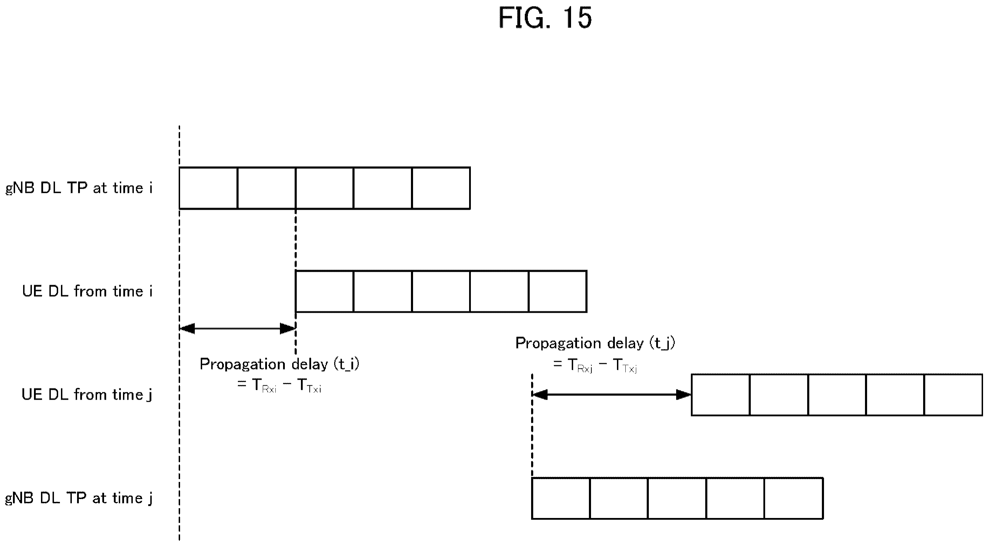

In Option 1-1, the UE 200 reports RSTD_NTN to the LMF 300. The RSTD_NTN is defined by Propagation delay (t_j) - Propagation delay (t_i). As illustrated in Fig. 15, the Propagation delay (t_j) is represented by T_{Rxj} - T_{Txj}, and the Propagation delay (t_i) is represented by T_{Rxi} - T_{Txi}. The Propagation delay (t_i) may be read as Reference propagation delay (t_i).

The RSTD_NTN may be represented by RSTD_NTN = T_{Rxj} - T_{Txj} - (T_{Rxi} - T_{Txi}). The T_{Rxj} is a time at which the UE 200 receives the DL-PRS transmitted from the TRP at time j. The T_{Rxi} is a time at which the UE 200 receives the DL-PRS transmitted from the TRP at time i. The T_{Txj} is a time at which the DL-PRS is transmitted from the TRP at time j. The T_{Txi} is a time at which the DL-PRS is transmitted from the TRP at time i.

Note that a notification of the time at which the DL-PRS is transmitted may be provided from the gNB 100 or the LMF 300 to the UE 200.

In Option 1, the "time period until the DL-PRS is transmitted from the TRP at time j and received by the UE 200" may be read as the "time period until the DL-PRS is transmitted from the TRP at time j and received by the UE 200 from the satellite 150". Such a time period may be read as the UE-specific TA or may be read as the UE Rx-Tx time difference described in (5) UE/gNB Rx-Tx time difference.

In Option 2, the DL-RSTD may be a reception timing difference of the DL-PRSs transmitted from the same TRP at time j and time i.

In Option 2-1, the UE 200 reports RSTD_NTN to the LMF 300. The RSTD_NTN may be the RSTD(T_{Rxj} - T_{Rxi}) used in the TN. Further, the gNB 100 reports a time offset (T_{DL_NTNoffset}) to the LMF 300.

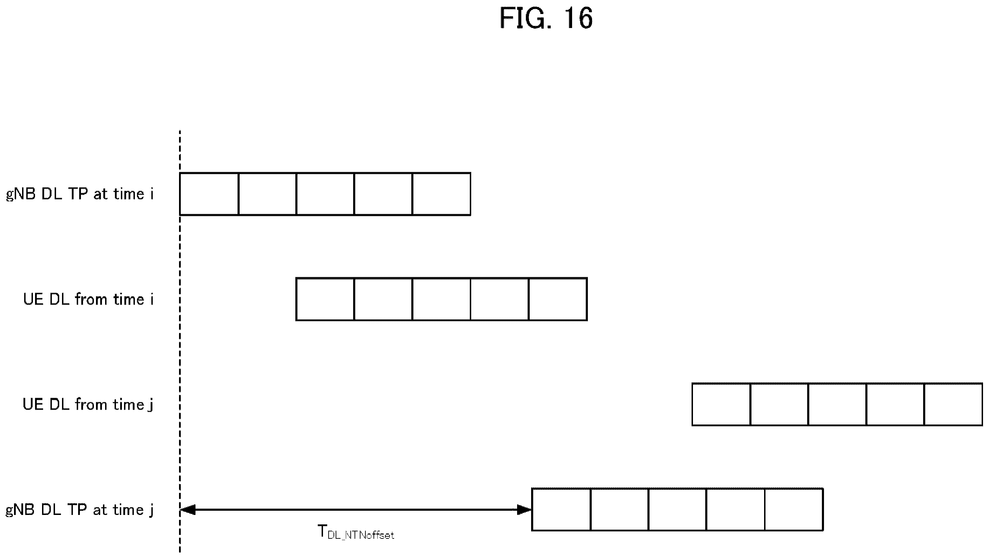

The T_{Rxj} is a time at which the UE 200 receives the DL-PRS transmitted from the TRP at time j. The T_{Rxi} is a time at which the UE 200 receives the DL-PRS transmitted from the TRP at time i. The T_{DL_NTNoffset} is a time offset for compensating for a lag in DL-PRS transmission. For example, as illustrated in Fig. 16, the T_{DL_NTNoffset} may be determined by a difference between time i and time j at which the TRP is transmitted. The T_{DL_NTNoffset} may be represented by the granularity of symbol/slot/sub-frame/frame/millisecond/second.

In Option 2-2, the UE 200 reports the T_{Rxj} and the T_{Rxi} to the LMF 300. Further, the gNB 100 reports a time offset (T_{DL_NTNoffset}) to the LMF 300. The DL-RSTD is calculated by the LMF 300. The T_{DL_NTNoffset} is similar to that in Option 2-1.

In Option 2-3, the UE 200 reports to the LMF 300 the relative time to the reference time at which the UE 200 receives the DL-PRS transmitted from the TRP at time j. The UE 200 reports to the LMF 300 the relative time to the reference time at which the UE 200 receives the DL-PRS transmitted from the TRP at time i. Further, the gNB 100 reports a time offset (T_{DL_NTNoffset}) to the LMF 300. The DL-RSTD is calculated by the LMF 300. The T_{DL_NTNoffset} is similar to that in Option 2-1.

Here, the reference time may be an absolute time defined by T₀ + t_{PRS}. T₀ may be a nominal start time of SFN 0 provided by SFN Initialization Time. t_{PRS} may be represented by t_{PRS} = (10n_{f} + n_{sf}) × 10⁻³. n_{f} and n_{fs} are the SFN and subframe number of the PRS. A notification of the time reference may be provided from the gNB 100 or the LMF 300 to the UE 200.

In Option 3, the DL-RSTD may be a reception timing difference of the DL-PRSs transmitted from the same TRP at time j and time i. As the difference from Option 2, the UE 200 considers a time lag.

Specifically, the UE 200 reports the RSTD_NTN to the LMF 300. The RSTD_NTN is represented by RSTD_NTN = T_{DL_NTNoffset} + T_{Rxj} - T_{Rxi}. The definitions of the T_{DL_NTNoffset}, the T_{Rxy}, and the T_{Rxi} are similar to those in Option 2-1. The T_{DL_NTNoffset} may be defined in advance in the radio communication system 10, or a notification of the T_{DL_NTNoffset} may be provided from the gNB 100 or the LMF 300 to the UE 200. A notification of the T_{DL_NTNoffset} may be provided by LPP/RRC message/MAC CE/DCI. The T_{DL_NTNoffset} may be represented by the granularity of symbol/slot/sub-frame/frame/millisecond/second.

In Operation Example 2, the DL-RSTD may be represented by the granularity of symbol/slot/sub-frame/frame/millisecond/second. The value range of the DL-RSTD used in the NTN may be wider than the value range of the DL-RSTD used in the TN.

### (7) UL-RTOA

Next, Problem 3 and Operation Example 3 regarding the UL-RTOA will be described.

### (7.1) Problem 3

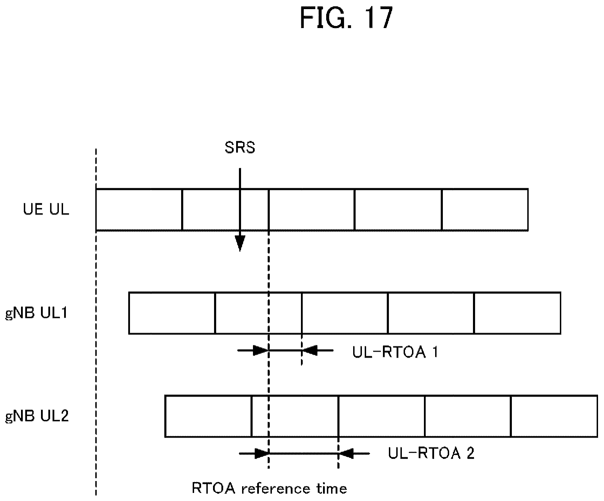

In the TN, as illustrated in Fig. 17, the UL-RTOA is defined by the head of subframe i including the SRS received at Reception Point j relative to RTOA Reference Time. The RTOA Reference Time is defined by T_{_0} + t_{_SRS}. T₀ may be a nominal start time of SFN 0 provided by SFN Initialization Time. t_{SRS} may be represented by t_{SRS} = (10n_{f} + n_{sf}) × 10⁻³. n_{f} and n_{fs} are the SFN and subframe number of the PRS. The UL-RSTD may be information defined in §5.2.2 "UL Relative Time of Arrival (T_{UL-RTOA})" of 3GPP TS38.215 V17.3.0.

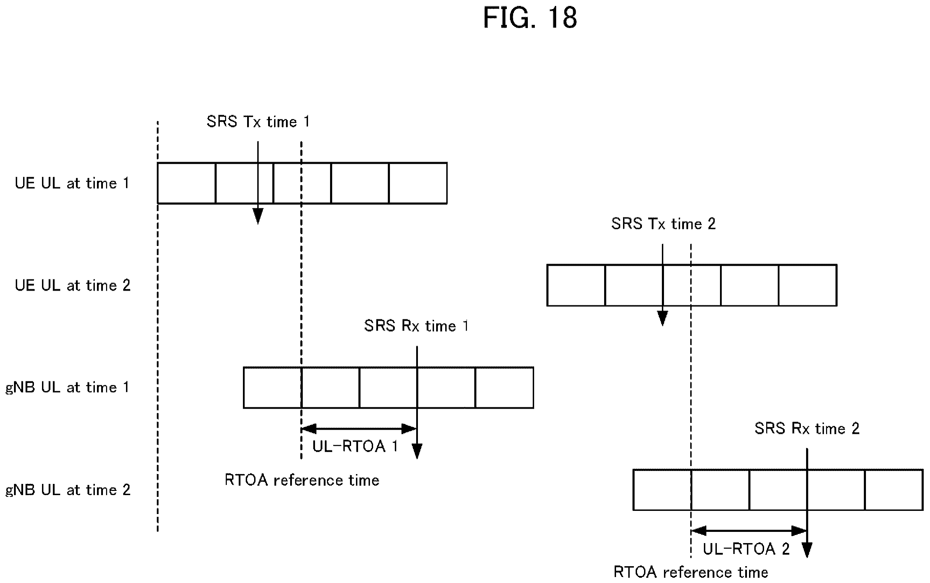

However, in the NTN, as illustrated in Fig. 18, the UL-SRS is transmitted from the UE 200 at different times and is received by one TRP. At different measurement timings, the value of TA pre-compensation with respect to a large propagation delay may be different. Accordingly, the definition of the UL-RTOA used in the TN cannot be used.

### (7.2) Operation Example 3

In order to solve Problem 3 described above, Operation Example 3 described below may be adopted. In Operation Example 3 described below, the definition of the UL-RTOA used in the NTN will be described. The definition of the UL-RTOA used in the NTN may be different from the definition of the UL-RTOA used in the TN. As the UL-RTOA, the options described below are conceivable.

In Option 1, an UL-RTOA specific to the NTN may be defined. Specifically, the UL-RTOA is defined by the reception time of the SRS at the TRP with respect to the RTOA Reference Time in consideration of TA pre-compensation with respect to the propagation delay.

In Option 1-1, the definition of the RTOA Reference Time is reused. RTOA_NTN is defined by T_{Rx} - RTOA Reference Time +/- T_{UL-NTNoffset}. The T_{Rx} is a time at which the TRP receives UL-rsr. The T_{UL-NTNoffset} is a time offset for aligning the transmission time of the UL-SRS at the UE 200 at different measurement timings.

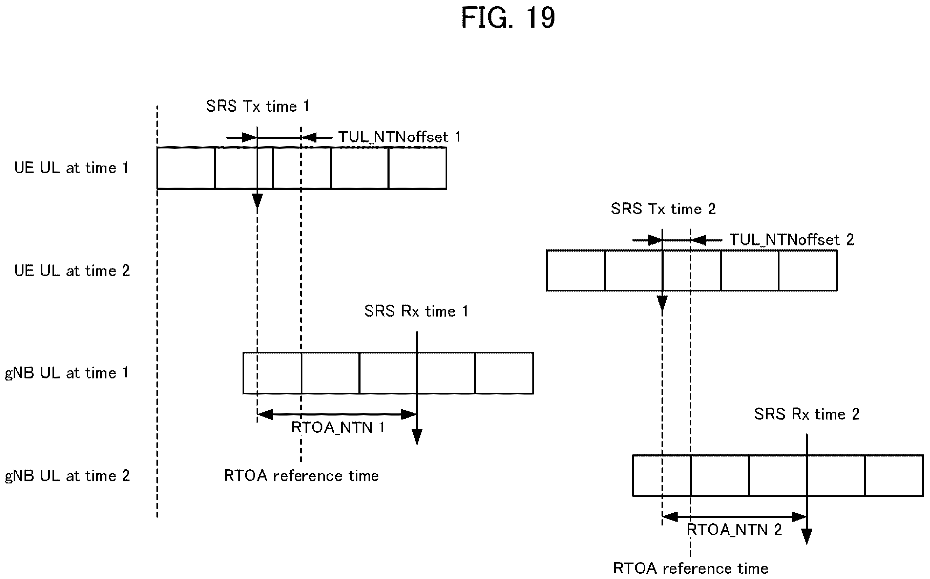

The T_{UL-NTNoffset} is determined on the basis of UE-specific TA, TA (including common TA and UE specific TA) applied by the UE 200, the propagation delay/RTT between the UE 200 and the TRP, and the propagation delay/RTT between the UE 200 and the satellite 150. Accordingly, as illustrated in Fig. 19, the T_{UL-NTNoffset} may be different for each measurement timing (in Fig. 19, time 1 and time 2). The T_{UL-NTNoffset} may be defined in advance in the radio communication system 10, may be determined by implementation of the network, or a notification of the T_{UL-NTNoffset} may be provided from the UE 200 to the gNB 100 or the LMF 300. A notification of the T_{UL-NTNoffset} may be provided by LPP/RRC message/MAC CE/DCI. The T_{UL-NTNoffset} may be represented by the granularity of symbol/slot/sub-frame/frame/millisecond/second.

In Option 1-2, an RTOA Reference Time specific to the NTN is newly defined. The RTOA Reference Time is defined by T_{_0} + t_{_SRS} +/- T_{UL-NTNoffset}. RTOA_NTN is defined by T_{Rx} - RTOA Reference Time. The T_{Rx} and the T_{UL-NTNoffset} are similar to those in Option 1-1.

In Option 2, the definition of the RTOA used in the TN is used, and a time offset (T_{UL-NTNoffset}) is used in addition to the RTOA used in the TN. The T_{UL-NTNoffset} is similar to that in Option 1-1. A notification of the T_{UL-NTNoffset} may be directly provided from the UE 200 to the LMF 300.

In Operation Example 3, the UL-RTOA may be represented by the granularity of symbol/slot/sub-frame/frame/millisecond/second. The value range of the UL-RTOA used in the NTN may be wider than the value range of the UL-RTOA used in the TN.

### (8) NTN verification

Next, Problem 4 and Operation Example 4 regarding the NTN verification will be described.

### (8.1) Problem 4

As described above, the definition of the information (UE/gNB Rx-Tx time difference, DL-RSTD, UL-RTOA) used in the NTN is different from the definition of the information used in the TN. Accordingly, a mechanism for appropriately triggering the operation of the gNB 100 unique to the NTN and the operation of the UE 200 in the NTN is necessary. For example, a mechanism for appropriately triggering measurement/report of the gNB 100 and the UE 200 is necessary.

### (8.2) Operation Example 4

In order to solve Problem 4 described above, Operation Example 4 described below may be adopted. Specifically, in Operation Example 4, the NTN verification is considered separately from NR(TN) positioning. As the NTN verification, the options described below are conceivable.

In Option 1, the gNB 100 determines execution of NTN-specific Assistance Information report or NTN-specific Measurement for the NTN verification based on a notification received from the LMF 300 via the NRPPa. The notification from the LMF 300 to the gNB 100 may be provided separately from the notification related to Assistance Information used in NR(TN) positioning, or may be provided together with the notification related to Assistance Information used in NR(TN) positioning.

The notification from the LMF 300 to the gNB 100 may include one or more pieces of NTN-specific information. As the NTN-specific information, Alt. described below is conceivable.

In Alt.1, the NTN-specific information may include a request for additional reporting to execute measurement in the NTN. For example, as the information element of the NRPPa, the information element (for example, "NTNoffsetforMeasurement") instructing the measurement of the time offset described in Operation Examples 1 to 3 may be defined.

Note that at least some of the information elements used in NR(TN) positioning may be omitted in the NTN verification. The omittable information element may include PCI, GCI and TRP ID. Note that PCI, GCI and TRP ID may include an information element used in a case where two or more cells can be assumed (that is, estimation of the location information of the UE 200 using the TN). A possible information element may include SSB information (the time/frequency occupancy of SSBs) of TRPs. Note that the SSB information of TRPs may include an information element used in a case where a non-serving gNB can be used (that is, estimation of the location information of the UE 200 using the TN). The omittable information element may include timing information of the TRPs provided by the gNB 100. Note that the timing information of TRPs may include an information element used in a case where a non-serving gNB can be used (that is, estimation of the location information of the UE 200 using the TN). The omittable information element may include a relative timing of candidate TRPs with respect to a serving (reference) TRP. Note that the relative timing may include an information element used in a case where the DL-PRS can be transmitted from two or more TRPs (that is, estimation of the location information of the UE 200 using the TN).

In Alt.2, the NTN-specific information may include a request for Assistance Information report for estimation of the location information of the UE 200. For example, the Assistance Information report may include location/orbit information (satellite ephemeris) of the satellite 150, the location of the satellite 150 at the measurement timing, common TA, information on the common TA, the position of the

### RP, Kmac, Koffset, and the like.

In Alt.3, the NTN-specific information may include a time interval at which no measurement is assumed. The time interval at which no measurement is assumed may correspond to a geographical problem. For example, the geographical problem may include a problem that the UE 200 is close to the orbit of the satellite 150.

In Alt.4, the NTN-specific information may include a measurement interval for estimation of the location information using one satellite 150. The measurement interval may be determined in consideration of both the delay request and the estimation accuracy.

Note that the NTN-specific information may include two or more Alt. selected from Alt.1 to Alt.4.

In Option 2, the UE 200 determines execution of NTN-specific Assistance Information report or NTN-specific Measurement for the NTN verification according to a specific trigger. As the specific trigger, Alt. described below is conceivable.

In Alt.1, the specific trigger may be an instruction from the LMF 300 via the LPP. The specific trigger may be an instruction from the gNB 100 via the RRC message/MAC

### CE/DCI.

In Alt.2, the UE 200 may transmit a request to the LMF 300 via the LPP. The UE 200 may transmit a request to the gNB 100 via the RRC message/MAC CE/DCI. In Alt.2, Alt. described below is conceivable according to the request.

In Alt.2-1, the gNB 100/LMF 300 transmits a response for confirming the request via the RRC parameters/MAC CE/DCI/LPP.

In Alt.2-2, the gNB 100/LMF 300 transmits a response instructing Assistance Information and/or setting for estimation of the location information via the RRC parameters/MAC CE/DCI/LPP.

In Alt.2-3, the gNB 100/LMF 300 transmits a response for rejecting the request via the RRC parameters/MAC CE/DCI/LPP. After receiving the response, the UE 200 may retransmit the request or may transmit a new request.

In Operation Example 4, the options described below are conceivable as an indication (Indication) of Alt.1 or a request (Request) of Alt.2.

In Option 1, a one-bit indicator used in the NR(TN) positioning may be reused. The one-bit indicator may be an indicator indicating a measurement method. For example, "0" may specify NR(TN) positioning, and "1" may specify NTN verification. Different information such as reporting type, additional information, and QoS requirements corresponding to each scenario (for example, Operation Examples 1 to 3) is provided according to different measurement methods.

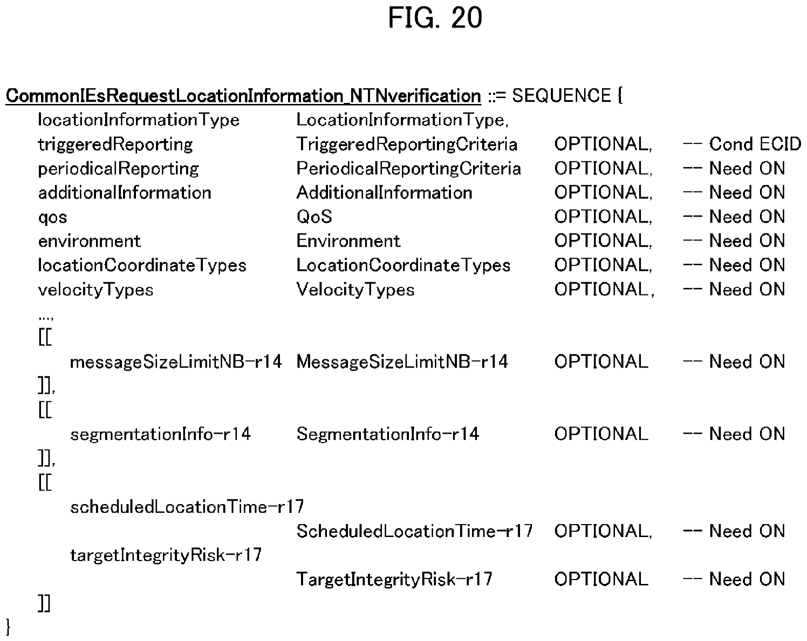

In Option 2, a new information element for the NTN verification may be defined. The new information element may be an information element illustrated in Fig. 20. The new information element may be referred to as CommonIEsRequestLocationInformation_NTNverification.

In Operation Example 4, the indication (Indication) of Alt.1 or the request (Request) of Alt.2 may include the NTN-specific information. As the NTN-specific information, Alt. described below is conceivable.

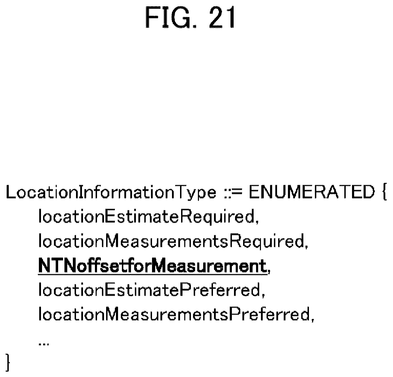

In Alt.1, the NTN-specific information may include a request for additional reporting to execute measurement in the NTN. For example, as illustrated in Fig. 21, as the information element of the LLP, the information element (for example, "NTNoffsetforMeasurement") instructing the measurement of the time offset described in Operation Examples 1 to 3 may be defined.

In Alt.2, the NTN-specific information may include a request for Assistance Information report for estimation of the location information of the UE 200. For example, the Assistance Information report may include UE-specific TA, TA (including common TA and UE specific TA) applied by the UE 200, a common TA value calculated by the UE 200, and the like.

In Alt.3, the NTN-specific information may include a time interval at which no measurement is assumed. The time interval at which no measurement is assumed may correspond to a geographical problem. For example, the geographical problem may include a problem that the UE 200 is close to the orbit of the satellite 150.

In Alt.4, the NTN-specific information may include a measurement interval for estimation of the location information using one satellite 150. The measurement interval may be determined in consideration of both the delay request and the estimation accuracy.

Note that the NTN-specific information may include two or more Alt. selected from Alt.1 to Alt.4.

### (9) Operations and effects

Here, in estimating the location information of the UE 200 in the NTN (NTN verification), the UE 200 assumes the information regarding the location information of the UE 200 with a definition different from that in the TN (for example, UE Rx-Tx time difference and DL-RSTD). With such a configuration, the location information of the UE 200 can be appropriately estimated even in the NTN in which the propagation delay between the gNB 100 and the UE 200 is large.

Here, in estimating the location information of the UE 200 in the NTN (NTN verification), the gNB 100 assumes the information regarding the location information of the UE 200 with a definition different from that in the TN (for example, UE Rx-Tx time difference and DL-RSTD). With such a configuration, the location information of the UE 200 can be appropriately estimated even in the NTN in which the propagation delay between the gNB 100 and the UE 200 is large.

### (10) Other embodiments

Although the contents of the present invention have been described above according to the embodiment, the present invention is not limited to these descriptions, and it is obvious to those skilled in the art that various modifications and improvements can be made.

In the above disclosure, the case where the non-terrestrial network device that relays the UL signal or the DL signal in the NTN is the satellite 150 has been exemplified. However, the above disclosure is not limited thereto. The non-terrestrial network device only needs to be a node constituting an NTN in the air, and may be referred to as an aerial node, may be referred to as an aerial floating body, or may be referred to as an aerial flying object.

Although not specifically mentioned in the above disclosure, the measurement regarding the location of the UE 200 may include measurement of an RSRP of the DL-PRS. The measurement regarding the location of the UE 200 may include measurement of an RSRP of the UL-SRS.

In the above disclosure, the case where the measurement result regarding the reference signal transmitted from one satellite 150 at different times is used in the estimation of the location information of the UE 200 in the NTN (NTN verification) has been exemplified. However, the above disclosure is not limited thereto. The above disclosure may be applied to a case where measurement results regarding reference signals transmitted from two or more satellites 150 are used.

Although not specifically mentioned in the above disclosure, the omission of the information element may be considered to be omission of transmission of the information element, omission of reception of the information element, disregard of the information element, exclusion of the information element, or the like.

Although not specifically mentioned in the above disclosure, UE Capability described below may be defined. The UE Capability described below may be reported from the UE 200 to the gNB 100.

The UE Capability may include an information element indicating whether or not any one or more operation examples selected from the above-described Operation Examples 1 to 3 are supported. The UE Capability may include an information element indicating whether or not any one or more options selected from the above-described options are supported.

In the above disclosure, configure, activate, update, indicate, enable, specify, and select may be read interchangeably. Similarly, link, associate, correspond, and map may be read interchangeably, and allocate, assign, monitor, and map may also be read interchangeably.

Furthermore, specific, dedicated, UE-specific, and UE-individual may be read interchangeably. Similarly, common, shared, group-common, UE-common, and UE-shared may be read interchangeably.

Note that the block diagrams (FIG. 4 to FIG. 6) that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)", a "transmitter", and the like. The method for implementing each component is not particularly limited as described above.

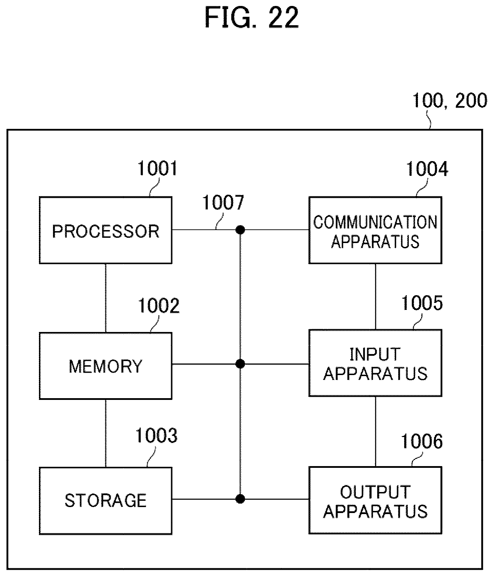

The eNB 100, the UE 200, and the LMF 300 (apparatuses) which are described above may function as a computer that executes the processes of the radio communication method of the present disclosure. FIG. 22 is a diagram to illustrating an example of a hardware structure of the apparatuses. As illustrated in FIG. 22, the apparatuses may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a unit, and so on can be interchangeably interpreted. The hardware structure of the apparatuses may be configured to include one or more of apparatuses shown in the drawings, or may be configured not to include part of apparatuses.

Each functional block of the apparatuses (see FIG. 4 to FIG. 6) is implemented by any of hardware elements of the computer apparatus or a combination of the hardware elements.

Each function of the apparatuses is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the method according to one embodiment of the present disclosure.

The storage 1003 is a computer-readable recording medium, and may be constituted with, for example, at least one of an optical disk such as a Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and other appropriate storage media. The storage 1003 may be referred to as "auxiliary storage apparatus". The above recording medium may be a database including the memory 1002 and/or the storage 1003, a server, or any other appropriate medium.

The communication apparatus 1004 is hardware (transmitting/receiving device) for allowing inter-computer communication via at least one of wired and wireless networks, and may be referred to as, for example, a "network device", a "network controller", a "network card", a "communication module", and so on.

The communication apparatus 1004 may be configured to include a high frequency switch, a duplexer, a filter, a frequency synthesizer, and so on in order to realize, for example, at least one of frequency division duplex (FDD) and time division duplex (TDD).

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the apparatuses may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

Notification of information is by no means limited to the aspects/embodiments described in the present disclosure, and other methods may be used as well. For example, notification of information in the present disclosure may be implemented by using physical layer signaling (for example, Downlink Control Information (DCI), Uplink Control Information (UCI)), higher layer signaling (for example, RRC signaling, Medium Access Control (MAC) signaling, broadcast information (Master Information Block (MIB), System Information Block (SIB), and so on)), and other signals or combinations of these. Also, RRC signaling may be referred to as an "RRC message", and can be, for example, an RRC Connection Setup message, an RRC Connection Reconfiguration message, and so on.

The aspects/embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG) (for example, x is an integer or decimal), Future Radio Access (FRA), New Radio (NR), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate systems, next-generation systems that are enhanced based on these, or combinations of these. A plurality of systems may be combined (for example, a combination of at least one of LTE and LTE-A, and 5G, and the like) for application.

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

Operations which have been described in the present disclosure to be performed by a base station may, in some cases, be performed by an upper node of the base station. In a network including one or a plurality of network nodes with the base station, it is clear that various operations that are performed to communicate with the terminal can be performed by the base station, one or more network nodes (for example, MME, S-GW, and so on may be possible, but these are not limiting) other than the base station, or combinations of these. According to the above, a case is described in which there is a single network node other than the base station. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and a term required for understanding of the present specification may be replaced by a term having the same or similar meaning. For example, at least one of a channel or a symbol may be a signal (signaling). Further, a signal may be a message. Further, the Component Carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "Base Station (BS)", a "radio base station", a "fixed station", a "NodeB", an "eNB (eNodeB)", a "gNB (gNodeB)", an "access point", a "transmission point", a "reception point", a "transmission/reception point", a "cell", a "sector", a "cell group", a "carrier", a "component carrier", and so on can be used interchangeably. The base station may be referred to as the terms such as a "macro cell", a "small cell", a "femto cell", a "pico cell", and so on.

The base station can accommodate one or a plurality of (for example, three) cells (also called sectors). When the base station accommodates a plurality of cells, the entire coverage area of the base station can be partitioned into multiple smaller areas, and each smaller area can provide communication services through base station subsystems (for example, indoor small base stations (Remote Radio Heads (RRHs))).

The term "cell" or "sector" refers to part of or the entire coverage area of at least one of the base station and a base station subsystem that provides communication services within this coverage.

In the present disclosure, "the base station transmits information to the terminal" may be read as "the base station instructs the terminal to perform a control or an operation based on information".

In the present disclosure, the terms "Mobile Station (MS)", "user terminal", "User Equipment (UE)", and "terminal" may be used interchangeably.

A mobile station may be referred to as a "subscriber station", a "mobile unit", a "subscriber unit", a "wireless unit", a "remote unit", a "mobile device", a "wireless device", a "wireless communication device", a "remote device", a "mobile subscriber station", an "access terminal", a "mobile terminal", a "wireless terminal", a "remote terminal", a "handset", a "user agent", a "mobile client", a "client", or some other appropriate terms in some cases.

At least one of the base station and the mobile station may be referred to as a "transmitting apparatus", a "receiving apparatus", a "radio communication apparatus", and so on. Note that at least one of the base station and the mobile station may be a device mounted on a moving object, a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of the base station and the mobile station also includes an apparatus which does not necessarily move during communication operation. For example, at least one of the base station and the mobile station may be an Internet of Things (IoT) device such as a sensor.

Furthermore, the base station in the present disclosure may be interpreted as a user station (user terminal, the same applies hereinafter). For example, each aspect/embodiment of the present disclosure may be applied to the structure that replaces a communication between the base station and the user station with a communication between a plurality of user stations (for example, which may be referred to as "Device-to-Device (D2D)", "Vehicle-to-Everything (V2X)", and the like). In this case, the user stations may have the functions of the base station described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user station in the present disclosure may be interpreted as the base station. In this case, the base station may have the functions of the user station.

A radio frame may be constituted of one or a plurality of frames in the time domain. Each of one or a plurality of frames in the time domain may be referred to as a "subframe".

Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a SubCarrier Spacing (SCS), a bandwidth, a symbol length, a cyclic prefix length, a Transmission Time Interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols less than the number of slots. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, the base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot", or the like. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "SubCarrier Group (SCG)", a "Resource Element Group (REG)", a "PRB pair", an "RB pair" and so on.

Furthermore, a resource block may be constituted of one or a plurality of Resource Elements (REs). For example, one RE may correspond to a radio resource field of one subcarrier and one symbol.

A Bandwidth Part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

The term "connected" or "coupled" or any variation thereof means any direct or indirect connection or coupling between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS", and may be referred to as a "pilot", depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

"Means" included in the configuration of each of the above apparatuses may be replaced by "parts", "circuits", "devices", etc.

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

As used herein, the term "determining" may encompasses a wide variety of actions. For example, "determining" may be regarded as judging, calculating, computing, processing, deriving, investigating, looking up, search inquiry (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing and the like. That is, "determining" may be regarded as a certain type of action related to determining. Furthermore, "determining" may be regarded as "assuming", "expecting", "considering", and the like.

In this disclosure, the term "A and B are different" may mean "A and B are different from each other". It should be noted that the term "A and B are different" may mean "A and B are different from C". Terms such as "separated" or "combined" may be interpreted in the same way as the above-described "different".

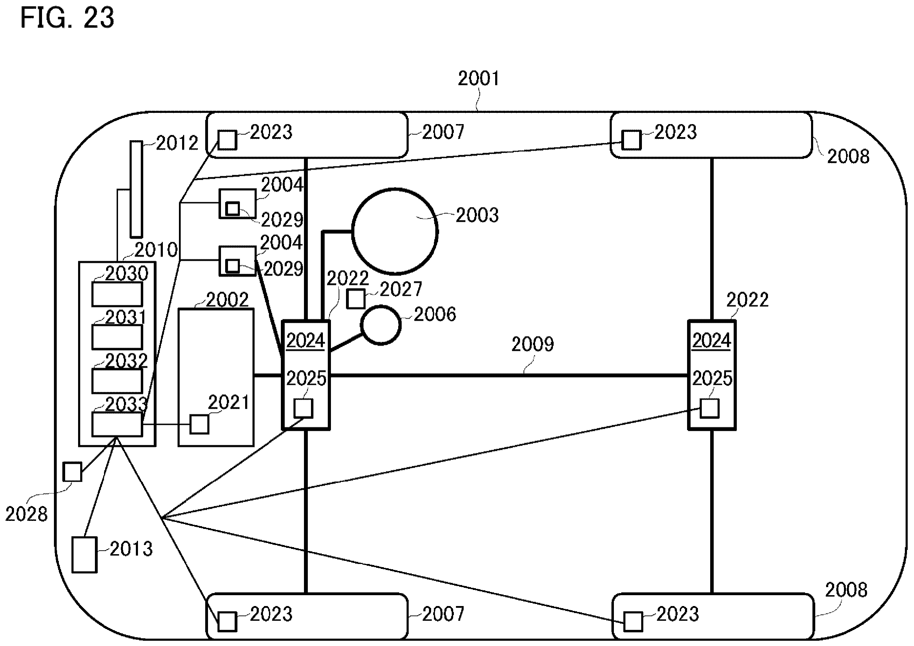

FIG. 23 illustrates an example of a configuration of a vehicle 2001. As illustrated in FIG. 23, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013.

The drive unit 2002 may include, for example, an engine, a motor, and a hybrid of an engine and a motor.

The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021 to 2027 provided in the vehicle 2001. The electronic control unit 2010 may be referred to as an ECU (Electronic control unit) .

The signals from the various sensors 2021 to 2028 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 1 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, and an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 1 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2028 provided in the vehicle 1.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits the current signal from the current sensor, which is input to the electronic control unit 2010, to external devices through radio communication. In addition, the communication module 2013 transmits to external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like.

The communication module 2013 receives various types of information (traffic information, signal information, inter-vehicle information, etc.) transmitted from the external devices and displays the received information on the information service unit 2012 provided in the vehicle. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021 to 2028, etc., mounted in the vehicle 2001.

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### (Supplementary Note)

The disclosure described above may be expressed as follows.

According to a first feature, there is provided a terminal including: a receiving unit that receives a downlink reference signal from a non-terrestrial network device via a non-terrestrial network; and a control unit that controls a report of a measurement result regarding the downlink reference signal in specific control of estimating location information of the terminal based on the downlink reference signal, wherein the control unit assumes information regarding the location information of the terminal with a definition different from a definition in a terrestrial network.

According to a second feature, there is provided the terminal in the first feature, in which the information regarding the location information of the terminal includes at least one of a time difference between a reception timing and a transmission timing related to the downlink reference signal and a time difference between reception timings of two or more downlink reference signals.

According to a third feature, there is provided a base station including: a receiving unit that receives an uplink reference signal from a non-terrestrial network device via a non-terrestrial network; and a control unit that controls a report of a measurement result regarding the uplink reference signal in specific control of estimating location information of a terminal based on the uplink reference signal, wherein the control unit assumes information regarding the location information of the terminal with a definition different from a definition in a terrestrial network.

According to a fourth feature, there is provided the base station in the third feature, in which the information regarding the location information of the terminal includes at least one of a time difference between a reception timing and a transmission timing related to the uplink reference signal and a time difference between reception timings of two or more uplink reference signals.

According to a fifth feature, there is provided a radio communication system including: a terminal; and a base station, wherein at least one node of the terminal and the base station includes a receiving unit that receives a reference signal from a non-terrestrial network device via a non-terrestrial network, and a control unit that controls a report of a measurement result regarding the reference signal in specific control of estimating location information of the terminal based on the reference signal, wherein the control unit assumes information regarding the location information of the terminal with a definition different from a definition in a terrestrial network.

According to a sixth feature, there is provided a radio communication method including: a step of receiving a reference signal from a non-terrestrial network device via a non-terrestrial network; a step of controlling a report of a measurement result regarding the reference signal in specific control of estimating location information of a terminal based on the reference signal; and a step of assuming information regarding the location information of the terminal with a definition different from a definition in a terrestrial network.

### [Explanation of Reference Numerals]

- 10: radio communication system
- 20: NG-RAN
- 30: core network
- 100: gNB
- 100X: NTN gateway
- 110: receiving unit
- 120: transmitting unit
- 130: control unit
- 200: UE
- 210: radio signal transmitting and receiving unit
- 220: amplifier unit
- 230: modulation and demodulation unit
- 240: control signal and reference signal processing unit
- 250: encoding and decoding unit
- 260: data transmitting and receiving unit
- 270: control unit
- 300: LMF
- 1001: processor
- 1002: memory
- 1003: storage
- 1004: communication apparatus
- 1005: input apparatus
- 1006: output apparatus
- 1007: bus
- 2001: vehicle
- 2002: drive unit
- 2003: steering unit
- 2004: accelerator pedal
- 2005: brake pedal
- 2006: shift lever
- 2007: front wheel
- 2008: rear wheel
- 2009: axle
- 2010: electronic control unit
- 2012: information service unit
- 2013: communication module
- 2021: current sensor
- 2022: revolution sensor
- 2023: pneumatic sensor
- 2024: vehicle speed sensor
- 2025: acceleration sensor
- 2026: brake pedal sensor
- 2027: shift lever sensor
- 2028: object detection sensor
- 2029: accelerator pedal sensor
- 2030: driving support system unit
- 2031: microprocessor
- 2032: memory (ROM, RAM)
- 2033: communication port

## Claims

1. A terminal comprising:
a receiving unit that receives a downlink reference signal from a non-terrestrial network device via a non-terrestrial network; and
a control unit that controls a report of a measurement result regarding the downlink reference signal in specific control of estimating location information of the terminal based on the downlink reference signal, wherein
the control unit assumes information regarding the location information of the terminal with a definition different from a definition in a terrestrial network.

2. The terminal according to claim 1, wherein the information regarding the location information of the terminal includes at least one of a time difference between a reception timing and a transmission timing related to the downlink reference signal and a time difference between reception timings of two or more downlink reference signals.

3. A base station comprising:
a receiving unit that receives an uplink reference signal from a non-terrestrial network device via a non-terrestrial network; and
a control unit that controls a report of a measurement result regarding the uplink reference signal in specific control of estimating location information of a terminal based on the uplink reference signal, wherein
the control unit assumes information regarding the location information of the terminal with a definition different from a definition in a terrestrial network.

4. The base station according to claim 3, wherein the information regarding the location information of the terminal includes at least one of a time difference between a reception timing and a transmission timing related to the uplink reference signal and a time difference between reception timings of two or more uplink reference signals.

5. A radio communication system comprising: a terminal; and a base station, wherein
at least one node of the terminal and the base station includes
a receiving unit that receives a reference signal from a non-terrestrial network device via a non-terrestrial network, and
a control unit that controls a report of a measurement result regarding the reference signal in specific control of estimating location information of the terminal based on the reference signal, wherein
the control unit assumes information regarding the location information of the terminal with a definition different from a definition in a terrestrial network.

6. A radio communication method comprising:
a step of receiving a reference signal from a non-terrestrial network device via a non-terrestrial network;
a step of controlling a report of a measurement result regarding the reference signal in specific control of estimating location information of a terminal based on the reference signal; and
a step of assuming information regarding the location information of the terminal with a definition different from a definition in a terrestrial network.
